# EUROPEAN PATENT APPLICATION

(11) **EP 3 826 252 A1**
(43) Date of publication of application: **26.05.2021**
(21) Application number: 18936173.6
(22) Date of filing: 01.10.2018
(51) Int. Cl.: H04L 27/26

(54) **BASE STATION AND TERMINAL DEVICE**

(71) Applicant: Mitsubishi Electric Corporation, Tokyo 100-8310 (JP)
(72) Inventor: SAMESHIMA, Keiko, Tokyo 1008310 (JP); KINOSHITA, Yusuke, Tokyo 1008310 (JP); TAKE, Keijiro, Tokyo 1008310 (JP); SAWAHASHI, Mamoru, Tokyo 1588557 (JP)
(74) Representative: Pfenning, Meinig & Partner mbB
(86) International application number: PCT/JP2018/036656
(87) International publication number: WO 2020/070768

(57) **Abstract**

The present invention provides a radio communication system in which a radio frame including a plurality of sub-frames is transmitted and received between a base station and a user equipment using an orthogonal frequency division multiple access scheme, wherein the sub-frames are each constituted by three or less OFDM symbols along a time direction and a plurality of sub-carriers along a frequency direction, and the base station includes: a first multiplexing unit (101) that multiplexes downlink control information in first OFDM symbol positions of the sub-frames in a frequency domain by allocating resources in such a manner that the resources are dispersed in the frequency direction in units of resource blocks each of which is constituted by a plurality of sub-carriers; a second multiplexing unit (102) that multiplexes user information in OFDM symbol positions other than the first OFDM symbol positions of the sub-frames in the frequency domain by allocating resources in such a manner that the resources are dispersed in the frequency direction in units of resource blocks; and an inserting unit (103) that inserts a guard time before and after the first OFDM symbol.

## Description

### Field

The present invention relates to a base station and a user equipment that perform communication using an orthogonal frequency division multiple access system.

### Background

The internet-of-things (IoT) that connects devices such as industrial control devices, sensors, meters, automobiles in the Internet protocol is considered to serve as an important future business. In a radio system used for the IoT, there have been demands for reduction in delay of transmission performed by a user equipment (UE). In order to achieve such reduction in delay of transmission performed by the user equipment, a round-trip time (RTT) needs to be shortened. In order to shorten an RTT, a method of shortening a transmission time interval (TTI) can be considered. A TTI is also called a sub-frame. In long term evolution (LTE) in a Release 8 version developed by Third Generation Partnership Project (3GPP), a TTI having a length of 14 orthogonal frequency division multiplexing (OFDM) symbols is employed.

Non Patent Literature 1 teaches a radio system employing a TTI having a length of two OFDM symbols and a TTI having a length of seven OFDM symbols in a frequency division duplex (FDD) mode in a physical layer while employing only a TTI having a length of seven OFDM symbols in a time division duplex (TDD) mode in the physical layer, so as to reduce a delay in transmission. Shortening the TTI length can make a processing time shorter, which enables reduction in transmission delay in radio communication.

### Citation List

### Non Patent Literature

Non Patent Literature 1: P. Schulz, M. Matthe, H. Klessig, M. Simsek, G. Fettweis, J. Ansari, S. Ali Ashraf, B. Almeroth, J. Voigt, I. Riedel, A. Puschmann, A. Mitschele-Thiel, M. Muller, T. Elste, and M. Windisch, "Latency Critical IoT Applications in 5G: Perspective on the Design of Radio Interface and Network Architecture," IEEE Commun. Mag., vol. 55, no. 2, pp. 70-78, Feb. 2017.

### Summary

### Technical Problem

In LTE, however, both a frame structure with a TTI length constituted by 14 OFDM symbols in the Release 8 version and a frame structure with TTI lengths of two OFDM symbols and seven OFDM symbols need to be present. This has been problematic in that resource allocation including retransmission becomes complicated because physical channels with different RTTs are multiplexed on one and the same carrier frequency.

The present invention has been made in view of the above, and an object thereof is to provide a base station capable of reducing complicated resource allocation, and reducing transmission delay in radio communication.

### Solution to Problem

In order to solve the above-mentioned problems and achieve the object, the present invention provides a base station in a radio communication system in which a radio frame including a plurality of sub-frames is transmitted and received between the base station and a user equipment using an orthogonal frequency division multiple access scheme, wherein the sub-frames are each constituted by three or less orthogonal frequency division multiplexing (OFDM) symbols in a time direction and a plurality of sub-carriers in a frequency direction, and the base station comprises: a first multiplexing unit to multiplex downlink control information in first OFDM symbol positions of the sub-frames in a frequency domain by allocating resources in such a manner that the resources are dispersed in the frequency direction in units of resource blocks, each of the resource blocks being constituted by a plurality of sub-carriers; a second multiplexing unit to multiplex user information in OFDM symbol positions other than the first OFDM symbol positions of the sub-frames in a frequency domain by allocating resources in such a manner that the resources are dispersed in a frequency direction in units of the resource blocks; and an inserting unit to insert a guard time before and after each of the first OFDM symbols.

### Advantageous Effects of Invention

A base station according to the present invention produces an advantageous effect of achieving a base station capable of preventing complicated resource allocation and reducing a transmission delay in radio communication.

### Brief Description of Drawings

FIG. 1 is a diagram illustrating a configuration of a radio communication system according to an embodiment.
FIG. 2 is a diagram illustrating an example of a structure of a sub-frame according to the embodiment.
FIG. 3 is a diagram illustrating another example of a structure of a sub-frame according to the embodiment.
FIG. 4 is a diagram illustrating functional blocks of a transmitting unit of a base station according to the embodiment.
FIG. 5 is a diagram illustrating functional blocks of a transmitting unit of a user equipment according to the embodiment.
FIG. 6 is a diagram illustrating a control circuit according to the embodiment.
FIG. 7 is a diagram illustrating a method of allocating resources in a frequency domain according to the embodiment.
FIG. 8 is a diagram illustrating an example of a method of resource allocation in a case where the number of information symbols resulting from error-correcting coding is equal to or smaller than the number of resource elements in one resource block in the embodiment.
FIG. 9 is a diagram illustrating an example of a method of resource allocation in a case where the number of information symbols resulting from error-correcting coding is equal to or larger than the number of resource elements in one resource block in the embodiment.
FIG. 10 is a diagram illustrating a practical example of a method of resource allocation in a case where the number of information symbols resulting from error-correcting coding cannot be multiplexed on one sub-frame period in the embodiment.
FIG. 11 is a diagram illustrating a method of multiplexing sub-frames within one frame according to the embodiment.
FIG. 12 is a chart illustrating a process flow of a transmitting unit of a user equipment based on a result of control information for allocation of sub-frames according to the embodiment.

### Description of Embodiments

A base station and a user equipment according to an embodiment of the present invention will be described in detail below with reference to the drawings. Note that the present invention is not necessarily limited by the embodiment.

### Embodiment.

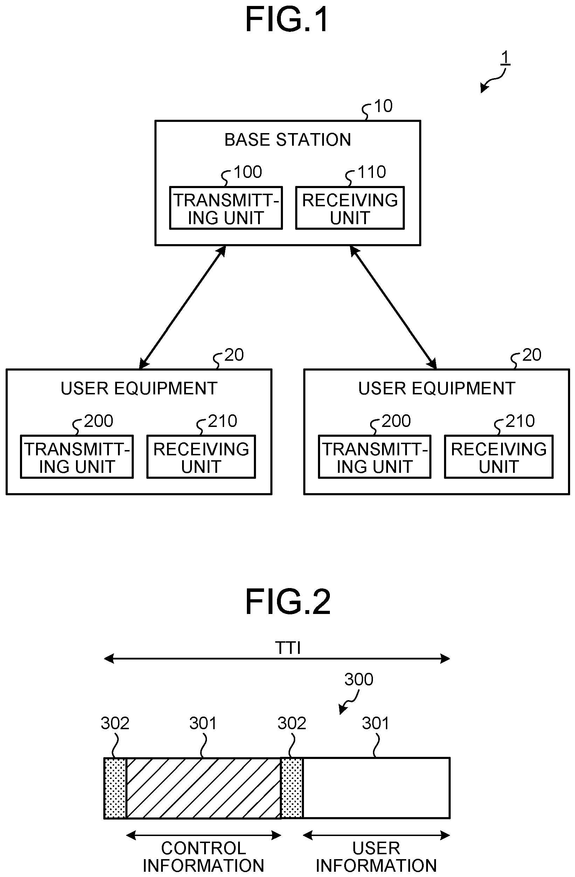

FIG. 1 is a diagram illustrating a configuration of a radio communication system according to an embodiment. A radio communication system 1 includes a base station 10 and a plurality of user equipments 20. The base station 10 is a device capable of communicating with the user equipments 20. The base station 10 includes a transmitting unit 100 and a receiving unit 110. The user equipment 20 includes a transmitting unit 200 and a receiving unit 210. The user equipment 20 is an IoT device having a communication function. Specifically, the user equipment 20 is a consumer device, an industrial control device, a sensor, a meter, an automobile, or the like. The base station 10 and the user equipment 20 can transmit radio frames each containing two or more sub-frames to each other in both directions. A sub-frame is constituted by three or less OFDM symbols in the time direction and two or more sub-carriers in the frequency direction.

The radio communication system 1 is an IoT system including an IoT device. Radio communication between the base station 10 and the user equipment 20 is performed in accordance with a radio specification dedicated to IoT transmission. Examples of conditions required for IoT transmission include long lifetime and low power consumption, low cost, wide coverage, and the like of the user equipment 20. The radio specification dedicated to IoT transmission is called a low power wide area network (LPWAN). Examples of the LPWAN using a frequency band for which no radio license is required include SIGFOX that is a radio specification produced by SIGFOX Company, and LoRaWAN supported by LoRa Alliance that is a non-profit organization. Examples of the LPWAN using a frequency band for which a radio license is required include the category M1 of 3GPP (enhanced machine type communications: eMTC), and narrow band (NB)-IoT.

IoT transmission is characterized in that the number of information bits is smaller and an information bit rate is lower than those in communication performed by an information terminal such as a typical smartphone. For this reason, narrowing the transmission bandwidth is effective for reducing power consumption of the user equipment 20. As the signal band is narrower, the clock frequency for modulation and demodulation processes of a baseband is lower, and the power consumption of the user equipment 20 can be reduced. In addition, as the signal band is narrower, transmission power density and reception power density per 1 Hz can be increased, and a distance that radio waves can travel, that is, a coverage area can thus be extended.

Therefore, in the radio specification dedicated to IoT transmission mentioned above by way of example, bands of 100 Hz, 125 kHz, 250 kHz, etc. are used. In this case, although the power consumption of the user equipment 20 can be reduced, decoding error occurs when the reception level is lowered because of frequency flat fading beinf suffered. In short, a frequency diversity effect can be obtained with a wideband signal, whereas a frequency diversity effect is less likely to be obtained with a narrowband signal. Furthermore, in a case of one-antenna configuration intended to reduce the power consumption of the user equipment 20 that is an IoT terminal, a space diversity effect cannot be obtained, either. For this reason, in the case of one-antenna configuration, frequency flat fading is likely to be suffered, and decoding error occurs when the reception level is lowered.

FIG. 2 is a diagram illustrating an example of a structure of a sub-frame according to the embodiment. A sub-frame is the smallest time unit for scheduling, and is constituted by a plurality of symbols. In addition, one TTI corresponds to one sub-frame. A first sub-frame 300 illustrated in FIG. 2 is transmitted by the transmitting unit 100 and the transmitting unit 200. In addition, the first sub-frame 300 is a sub-frame to be used in the orthogonal frequency division multiple access (OFDMA). In addition, the first sub-frame 300 is defined by two OFDM symbols 301 in the time direction and two or more sub-carriers in the frequency direction, and includes control information and user information. The first sub-frame 300 is constituted by two OFDM symbols 301. Note that, in the present embodiment, the smallest unit for allocation of resources in a frequency domain of the control information and the user information is defined as a resource block. Control information on a downlink and an uplink of the first sub-frame 300 is multiplexed on a first OFDM symbol period. In addition, the user information of the first sub-frame 300 is multiplexed on a second OFDM symbol period. A guard time (GT) 302 for absorbing a propagation delay time difference between the base station 10 and the user equipment 20 is inserted before and after a first OFDM symbol of the first sub-frame 300. A cyclic prefix (CP), which is not illustrated, is added to a head of each OFDM symbol of each of the control information and the user information.

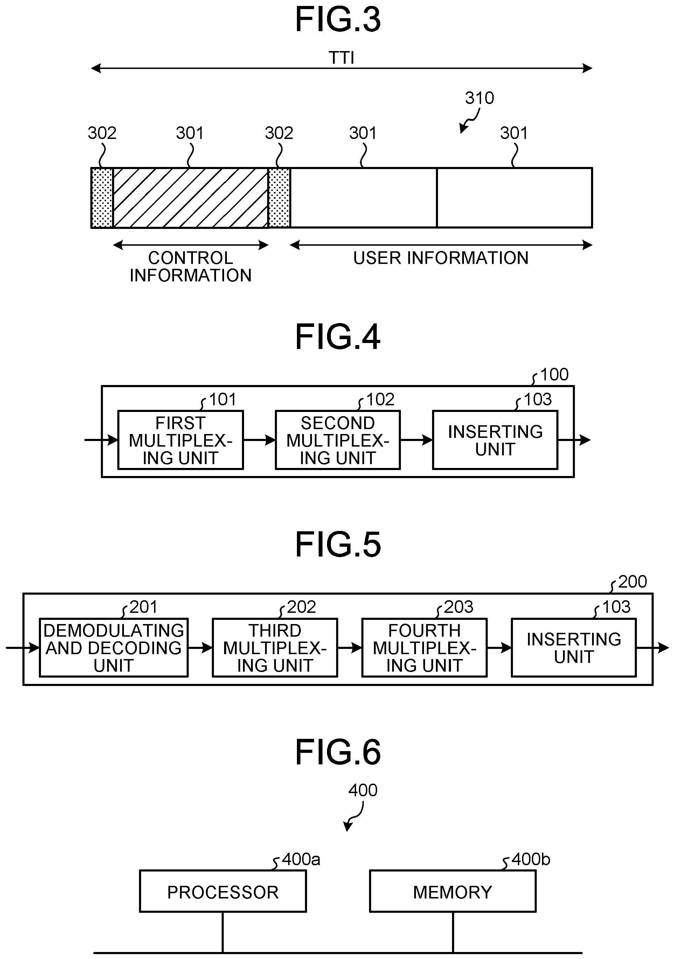

FIG. 3 is a diagram illustrating another example of a structure of a sub-frame according to the embodiment. A second sub-frame 310 illustrated in FIG. 3 is transmitted by the transmitting unit 100 and the transmitting unit 200 in a manner similar to the first sub-frame 300. In addition, the second sub-frame 310 is a sub-frame to be used in the orthogonal frequency division multiple access. In addition, the second sub-frame 310 is defined by three OFDM symbols 301 in the time direction and two or more sub-carriers in the frequency direction, and includes control information and user information. The second sub-frame 310 is constituted by three OFDM symbols 301.

Control information on a downlink and an uplink of the second sub-frame 310 is multiplexed on a first OFDM symbol period. In addition, the control information on the downlink and uplink is dispersed and multiplexed in units of resource blocks over different resource blocks in one and the same OFDM symbol period. In the case of the second sub-frame 310, the user information is multiplexed on a second OFDM symbol period and a third OFDM symbol period. This is because frequency hopping within a sub-frame (TTI) is applied when the number of information symbols resulting from error-correcting coding is less than the number of resource elements in one resource block. Details of the frequency hopping will be described later. A cyclic prefix (CP) is added to each OFDM symbol. The base station 10 and the user equipment 20 only use either one of the first sub-frame 300 and the second sub-frame 310. Accordingly, only one kind of round trip time (RTT) is used, which results in a configuration in which complicated timing control is not needed.

FIG. 4 is a diagram illustrating functional blocks of the transmitting unit 100 of the base station 10 according to the embodiment. The transmitting unit 100 includes a first multiplexing unit 101, a second multiplexing unit 102, and an inserting unit 103. The first multiplexing unit 101 multiplexes control information on a downlink at a first OFDM symbol position of the sub-frame in a frequency domain by allocating resources in such a manner that the resources are dispersed in the frequency direction in units of resource blocks each constituted by a plurality of sub-carriers. A resource block is constituted by a plurality of sub-carriers each of which has a frequency domain determined in advance. In addition, the first multiplexing unit 101 determines a sub-frame for a downlink and a sub-frame for an uplink in a radio frame using cell-specific control information included in broadcast information (broadcast channel: BCH) of the downlink, and allocates the sub-frames to the user equipments 20. The radio frame is a frame including a plurality of sub-frames. A cell refers to a range formed by the base station 10, in which the base station 10 can communicate with the user equipment 20. The second multiplexing unit 102 multiplexes user information in the frequency domain at a second OFDM symbol position in the case of the first sub-frame 300 or at second and third OFDM symbol positions in the case of the second sub-frame 310 by allocating resources in such a manner that the resources are dispersed in the frequency direction in units of resource blocks. In short, the second multiplexing unit 102 multiplexes the user information in the frequency domain at OFDM symbol positions other than the first OFDM symbol position of the sub-frame. In addition, the second multiplexing unit 102 allocates resource blocks on which user information on the downlink and user information on the uplink are to be multiplexed in units of sub-frames. The user information of the downlink is allocated to the same frequency band for each sub-frame. Similarly, the user information on the uplink is allocated to the same frequency band for each sub-frame. In other words, the second multiplexing unit 102 allocates the resource blocks in time division duplex (TDD). The inserting unit 103 inserts a guard time before and after the first OFDM symbol.

FIG. 5 is a diagram illustrating functional blocks of the transmitting unit 200 of the user equipment 20 according to the embodiment. The transmitting unit 200 includes a demodulating and decoding unit 201, a third multiplexing unit 202, a fourth multiplexing unit 203, and an inserting unit 103. The demodulating and decoding unit 201 demodulates and decodes control information on the downlink. In addition, the demodulating and decoding unit 201 demodulates and decodes cell-specific control information of broadcast information on the downlink, transmitted from the base station 10, and extracts allocation information for sub-frames for the downlink and sub-frames for the uplink in a radio frame.

The third multiplexing unit 202 multiplexes control information on the uplink into a resource block in which control information on the downlink at the first OFDM symbol position is not multiplexed. In the case of the first sub-frame 300, the fourth multiplexing unit 203 multiplexes information symbols of the user information in units of resource blocks at the second OFDM symbol position in the sub-frame allocated according to decoded information of the control information on the downlink. In other words, the fourth multiplexing unit 203 multiplexes the user information in the frequency domain at OFDM symbol positions other than the first OFDM symbol position in the sub-frame. In addition, in the case of the second sub-frame 310, the fourth multiplexing unit 203 multiplexes information symbols of the user information in units of resource blocks at the second and third OFDM symbol positions in the sub-frame allocated according to decoded information of the control information on the downlink.

The transmitting unit 100 and the transmitting unit 200 are implemented by a processing circuit that is an electronic circuit for carrying out several processes.

The processing circuit may be based on dedicated hardware, or may be a control circuit including a memory and a central processing unit (CPU) that executes a program stored in the memory. Note that the said memory corresponds to a nonvolatile or volatile semiconductor memory such as a random access memory (RAM), a read only memory (ROM) or a flash memory, a magnetic disk, or an optical disk, for example. FIG. 6 is a diagram illustrating a control circuit according to the embodiment. In a case where the processing circuit is a control circuit equipped with a CPU, the control circuit is realized by a control circuit 400 having a configuration illustrated in FIG. 6, for example.

As illustrated in FIG. 6, the control circuit 400 includes a processor 400a, which is a CPU, and a memory 400b. In a case of implementation based on the control circuit 400 illustrated in FIG. 6, the processor 400a reads and executes a program corresponding to each process, stored in the memory 400b to realize the impleventation. Furthermore, the memory 400b is also used as a temporary memory in each process performed by the processor 400a.

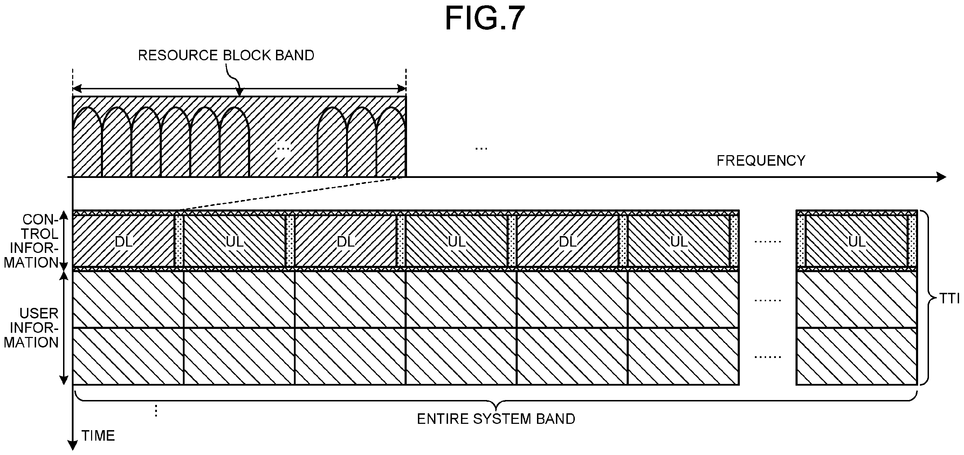

FIG. 7 is a diagram illustrating a method of allocating resources in the frequency domain according to the embodiment. The second multiplexing unit 102 allocates resource blocks on which the user information is to be multiplexed, in units of sub-frames to one and the same frequency domain. The number of sub-carriers in a resource block is represented by N_{RB}. In the present embodiment, a case where TDD is applied as a multiplexing method is presented. When a sub-carrier interval is f_{SC}=15 kHz, a system bandwidth is 20 MHz, and a channel occupied bandwidth is 18 MHz, the number of sub-carriers is 1200. The system bandwidth refers to a bandwidth the radio communication system 1 can process. The channel occupied bandwidth refers to a bandwidth in which the signal strength is equal to or higher than a predetermined strength within the system bandwidth. When N_{RB}=48, a resource block bandwidth is 720 kHz. In order that the base station 10 and the user equipment 20 achieves high-quality reception with a bit error rate (BER) of about 10⁻⁶ to 10⁻⁹, diversity is essential. Thus, the second multiplexing unit 102 can average burst errors caused by multipath fading on the basis of the frequency diversity effect by allocating resource blocks on which the user information is to be multiplexed, in units of sub-frames to one and the same frequency domain, and achieve a low BER by virtue of a coding gain of the error-correcting coding. Because the first sub-frame 300 and the second sub-frame 310 have a sub-frame length shorter than that of a sub-frame in LTE of the Release 8 version, the time diversity effect is less likely to be produced. Thus, in the present embodiment, the base station 10 and the user equipment 20 achieve a sufficient frequency diversity effect by performing wideband transmission of about 20 MHz or higher in the frequency domain.

As illustrated in FIG. 7, control information on the uplink and downlink of the second sub-frame 310 is multiplexed in the first OFDM symbol period by the first multiplexing unit 101 and the third multiplexing unit 202. Uplink is also referred to as UL (UpLink). Downlink is also referred to as DL (DownLink). In a case where the number of OFDM symbols included in one TTI period is small, when one OFDM symbol period is used for each of control information for the uplink and control information for the downlink, a total of two OFDM symbol periods are needed, and the number of OFDM symbols for multiplexing information symbols for the downlink or uplink is reduced. Thus, the maximum number of information bits that can be transmitted in one TTI period is reduced. In contrast, when control information for the uplink and control information for the downlink are multiplexed in one and the same OFDM symbol period, the peak number of information bits that can be transmitted in the downlink or uplink can be increased. Note that, in the present embodiment, wideband transmission using a frequency domain of about 20 MHz or higher is performed. Thus, a sufficient number of resource elements (sub-carriers) on which control information for the uplink and downlink can be multiplexed are present in one OFDM symbol period.

A guard time (GT) is inserted before and after the first OFDM symbols of the first sub-frame 300 and the second sub-frame 310. The insertion of the guard times is performed by the inserting unit 103. The uplink control information and the downlink control information multiplexed in units of resource blocks are dispersed and multiplexed over the entire system band in units of resource blocks each constituted by N_{RB} sub-carriers. Thus, the frequency diversity effect is obtained by multiplexing the uplink control information and the downlink control information on wideband signals in each OFDM symbol period, and a low BLER or BER can be achieved by virtue of the coding gain of the error-correcting coding. Note that, the present invention is directed to a configuration in which the uplink control information and the downlink control information multiplexed in units of resource blocks are dispersed and multiplexed over the entire system band in units of resource blocks each constituted by N_{RB} sub-carriers, but the uplink control information and the downlink control information may be dispersed and multiplexed over a specified band without limitation to the entire system band. Because the uplink control information and the downlink control information are multiplexed in one and the same OFDM symbol period, the transmitting unit 100 and the transmitting unit 200 attenuate leakage power to a resource block other than a resource block on which the control information is to be multiplexed, by applying a band-pass filter (BPF) configured to only allow transmission control information to pass therethrough, to a signal obtained by performing processing of inverse fast Fourier transform (IFFT) on each piece of control information. In addition, a guard band is inserted between resource blocks on which the uplink control information and the downlink control information are multiplexed. The receiving unit 110 and the receiving unit 210 make received signals pass through BPF sets that only extract the uplink and downlink control information pieces, respectively, and then performs an FFT process on the resultant outputs of the sets.

The downlink control information is broadcast information (broadcast channel). Examples of the downlink control information include information on allocation of a downlink data channel, a modulation scheme, error-correcting coding rate symbol repetition factor (transport block size), information on a hybrid automatic repeat request (ARQ), Grant information on an uplink, and Ack or Nack information of a data channel on an uplink. A piece of control information for a downlink data channel and another piece of control information for an uplink data channel, transmitted by the base station 10, are subjected to error-correcting coding independently of each other, and mapped to symbols of bits after the error-correcting coding independently of each other, so that the respective pieces of control information can be separately demodulated and decoded.

On an uplink control channel, one sub-frame is accessed at the same time by two or more user equipments 20. The orthogonal code division multiple access (CDMA) is therefore used as a multiplexing method for a control channel of different user equipments 20 within one and the same sub-frame. This is because, although multiplexing in the OFDM system can also be used, a control channel per one user equipment 20 becomes a narrow band in the case of the OFDM system, and so the orthogonal CDMA multiplexing is more effective in view of the frequency diversity effect. Specifically, Walsh-Hadamard codes or the like can be applied. A reception timing difference between user equipments 20 having their respective different propagation delay times is absorbed in a guard interval using a CP. In addition, in the uplink, the user equipment 20 performs transmission with a transmission power that compensates for an average bus loss including distance attenuation estimated using a downlink reference signal (RS) and shadowing variation.

In the case where the first sub-frame 300 is used, the second multiplexing unit 102 allocates resource blocks on which the user information is to be multiplexed, to second OFDM symbol positions in units of sub-frames. In addition, in the case where the second sub-frame 310 is used, the second multiplexing unit 102 allocates resource blocks on which the user information is to be multiplexed, to second and third OFDM symbol positions in units of sub-frames. In addition, the user information is dispersed and multiplexed over the entire system band in units of resource blocks by the second multiplexing unit 102. The base station 10 performs scheduling for determining which common channel to be used for which user equipment 20. In LTE, dynamic scheduling is standardized as this scheduling method. In the present embodiment, the frequency diversity effect is obtained by dispersing and multiplexing on wideband signals instead of dynamic scheduling. It is noted that the dispersing and multiplexing on wideband signals refers to an operation in which intervals between resource blocks are made away from each other to be dispersed, and then multiplexed. Thus, in the present embodiment, control on complicated resource allocation caused by the dynamic scheduling in the base station 10 can be eliminated.

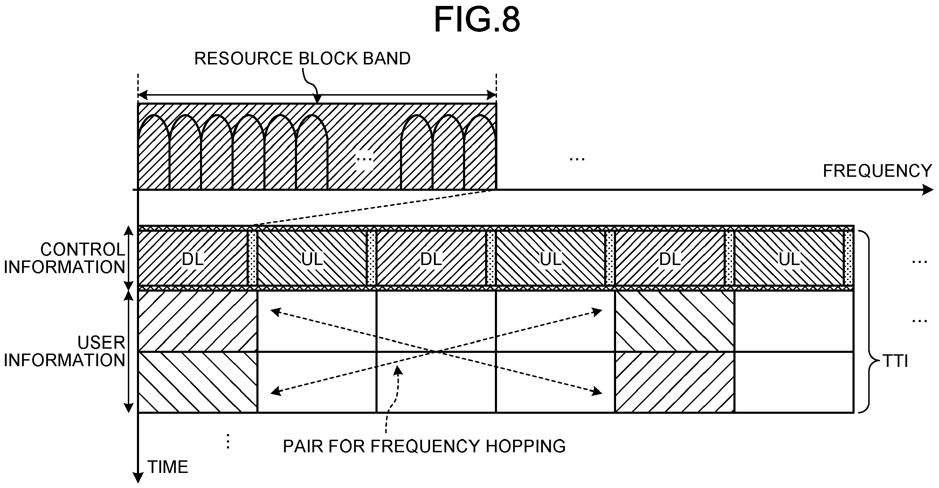

In the present embodiment, a method of resource allocation depending on the number of information bits is performed. Description is given now for a case of the second sub-frame 310 in which the number of information symbols resulting from error-correcting coding is smaller than the number of resource elements in one resource block of one OFDM symbol. FIG. 8 is a diagram illustrating an example of a method of resource allocation in a case where the number of information symbols resulting from error-correcting coding is smaller than the number of resource elements in one resource block according to the embodiment. When the number of information symbols resulting from error-correcting coding is equal to or smaller than the number of resource elements in one resource block in one OFDM symbol period, the second multiplexing unit 102 and the fourth multiplexing unit 203 multiplex the user information on different resource blocks at the second and third OFDM symbol positions. Thus, as illustrated in FIG. 8, when the number of information bits per one transmission is small, frequency hopping within a sub-frame is applied. In particular, because a control device in a factory or the like is installed indoors, the delay spread of delay waves is short. Therefore, variation of channel response in the frequency range is slow, and thereby the frequency diversity effect can be obtained by frequency hopping in a wide frequency range.

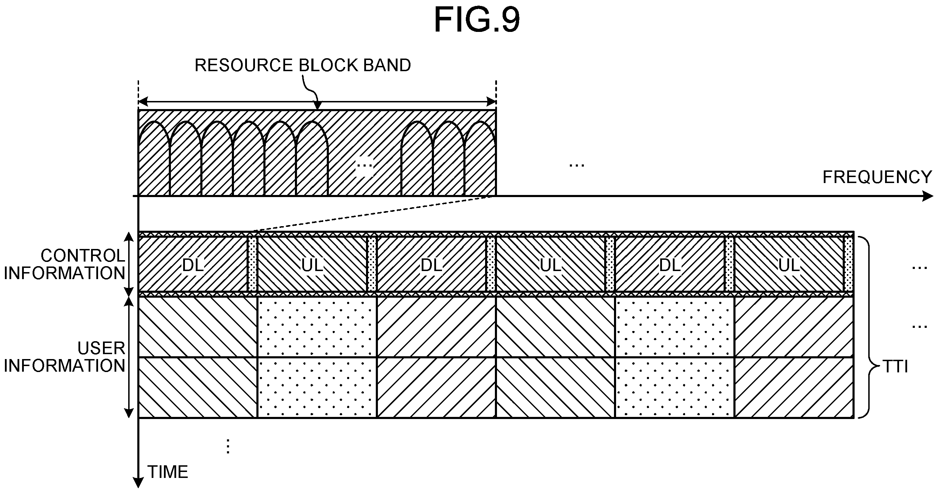

A case where the number of information symbols resulting from error-correcting coding is equal to or larger than one resource block will be described. FIG. 9 is a diagram illustrating an example of a method of resource allocation in a case where the number of information symbols resulting from error-correcting coding is equal to or larger than the number of resource elements in one resource block according to the embodiment. When the number of information symbols resulting from error-correcting coding is equal to or larger than one resource block, the first multiplexing unit 101, the second multiplexing unit 102, the third multiplexing unit 202, and the fourth multiplexing unit 203 perform dispersing and multiplexing in units of resource blocks. The number of resource blocks per user equipment 20 varies depending on the number of information bits per one transmission of the user equipment 20. Although the case of the second sub-frame 310 is explained in FIG. 9, dispersing and multiplexing in units of resource blocks can also be performed in the case of the first sub-frame 300.

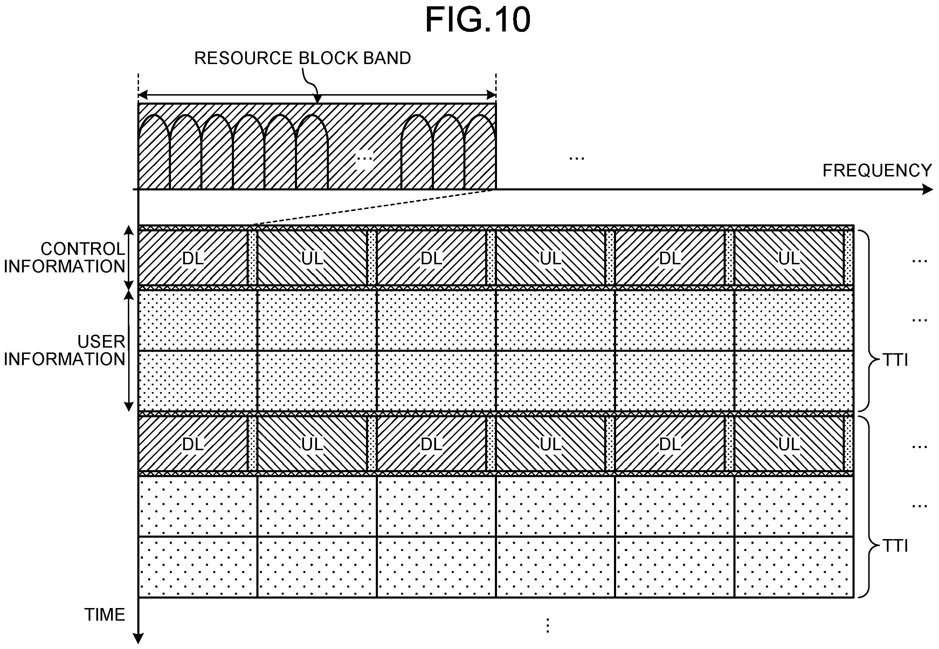

A case where the number of information symbols resulting from error-correcting coding cannot be multiplexed in one sub-frame period will be described. FIG. 10 is a diagram illustrating a working example of a method of resource allocation in a case where the number of information symbols resulting from error-correcting coding cannot be multiplexed in one sub-frame period according to the embodiment. When the user information cannot be multiplexed in one sub-frame period, the first multiplexing unit 101, the second multiplexing unit 102, the third multiplexing unit 202, and the fourth multiplexing unit 203 multiplex the user information while dividing it into two or more sub-frames. In this case, sub-frames allocated to one user equipment 20 need not be continuous. Although the case of the second sub-frame 310 is explained in FIG. 10, dispersing and multiplexing in units of resource blocks can be performed even in the case of the first sub-frame 300.

The second multiplexing unit 102 and the fourth multiplexing unit 203 control the modulation scheme, the coding rate of the error-correcting coding, and a symbol repetition factor depending on a target BLER or packet loss rate (PLR) according to the IoT traffic. In URLLC that achieves highly reliable reception with a BLER of about 10^{- 6} or lower, however, quadrature phase shift keying (QPSK) or 16 quadrature amplitude modulation (QAM) are basically considered as being applicable as the modulation scheme. In LTE, although the lowest coding rate of turbo codes is 1/3, application of low density parity check (LDPC) codes with a rate of 1/9 or lower is effective. After LDPC decoding, some decoding error remains in a range in which the BER is low. Concatenated codes of LDPC codes and BCH codes or Reed-Solomon codes are therefore effective.

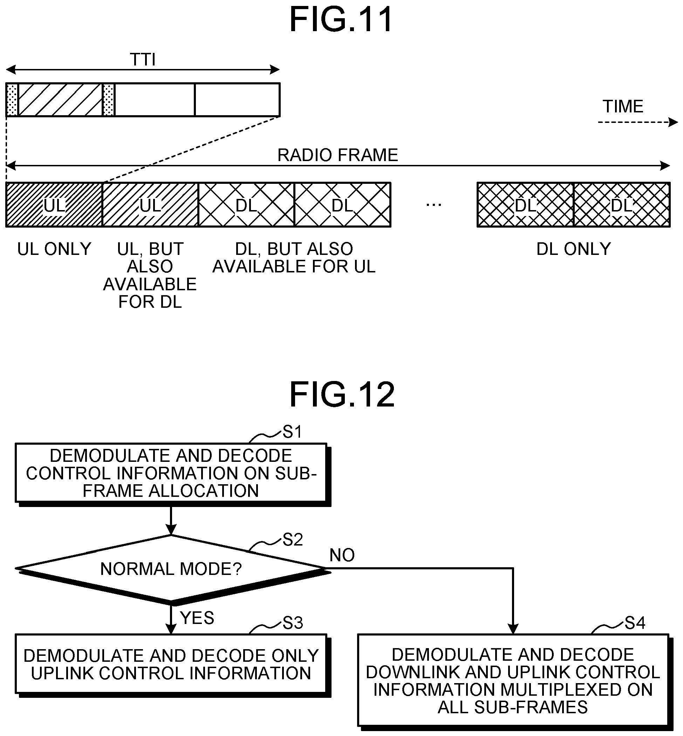

At the base station 10, a method of allocating sub-frames in TDD is used. FIG. 11 is a diagram illustrating a method of multiplexing sub-frames within one frame according to the embodiment. The number N_{DL} of downlink sub-frames and the number N_{UL} of uplink sub-frames in a radio frame constituted by a plurality of sub-frames are determined in advance on the basis of traffic distribution by the base station 10. The user equipment 20 is informed of the downlink sub-frame resource and the uplink sub-frame resource in the radio frame in a normal mode by downlink broadcast information when a radio link with the base station 10 is established. The normal mode is a mode corresponding to the case where broadcast information from the base station 10 indicates allocation of sub-frames in one frame. The normal mode is also referred to as a first mode.

The first sub-frame 300 and the second sub-frame 310 may be, in addition to sub-frames for uplink only or sub-frames for downlink only, sub-frames that are basically used for downlink but can also be subjected to resource allocation for uplink, or sub-frames that are basically used for uplink but can also be subjected to resource allocation for downlink. When no uplink transmission data is present, the base station 10 allocates the sub-frames that are basically used for uplink but can also be subjected to resource allocation for downlink, to multiplexing and transmission of downlink user information. In addition, when no downlink transmission data is present, the base station 10 allocates the sub-frames that are basically used for downlink but can also be subjected to resource allocation for uplink, to an uplink data channel.

The first multiplexing unit 101 multiplexes control information on sub-frame allocation indicating whether or not to allocate sub-frames for uplink only or downlink only in the normal mode set in advance in a resource space of downlink control information in the first OFDM symbol period of a leading sub-frame in each radio frame. FIG. 12 is a flowchart illustrating a process flow of the transmitting unit 200 of the user equipment 20 based on a result of control information for allocation of sub-frames according to the embodiment. The demodulating and decoding unit 201 demodulates and decodes the control information on sub-frame allocation (step S1).

The demodulating and decoding unit 201 detects whether sub-frame allocation is in a normal mode that has been set in advance or in an irregular mode (step S2). If the sub-frame allocation is in the normal mode (step S2, Yes), the demodulating and decoding unit 201 demodulates and decodes only uplink control information in sub-frame positions corresponding to sub-frames allocated to the uplink data channel. (step S3). Thus, the demodulating and decoding unit 201 does not perform demodulating and decoding of downlink control information other than that in a sub-frame position corresponding to a sub-frame allocated to the downlink data channel. Similarly, the demodulating and decoding unit 201 does not perform demodulating and decoding uplink control information other than that in a sub-frame position corresponding to a sub-frame allocated to the uplink data channel. In contrast, in the case of the irregular mode (step S2, No), the demodulating and decoding unit 201 demodulates and decodes downlink and uplink control information multiplexed on all the sub-frames (step S4).

In the normal mode, the transmitting unit 200 of the user equipment 20 multiplexes and transmits uplink control information in sub-frame positions corresponding to predetermined time positions relative to sub-frame positions to which the uplink data channel can be allocated. In contrast, in the irregular mode, the transmitting unit 200 of the user equipment 20 also multiplexes and transmits uplink control information in sub-frame positions other than the sub-frames corresponding to predetermined time positions relative to sub-frame positions to which the uplink sub-frames can be allocated.

As described above, in the present embodiment, the transmitting unit 100 and the transmitting unit 200 have configurations that do not need complicated resource allocation by transmitting and receiving only either one of the first sub-frame 300 and the second sub-frame 310. In addition, by performing wideband transmission with a system band of about 20 MHz or higher, it is possible to obtain a sufficient frequency diversity effect based on distribution and multiplexing and frequency hopping on the wideband signals. Thus, the base station 10 can reduce a transmission delay in radio communication by preventing complicated resource allocation and obtaining a certain diversity effect.

The configurations presented in the embodiment above are examples of the present invention, and each of them can be combined with other publicly known techniques and partly omitted and/or modified without departing from the scope of the present invention.

### Reference Signs List

1 radio communication system; 10 base station; 20 user equipment; 100, 200 transmitting unit; 110, 210 receiving unit; 101 first multiplexing unit; 102 second multiplexing unit; 103 inserting unit; 201 demodulating and decoding unit; 202 third multiplexing unit; 203 fourth multiplexing unit; 300 first sub-frame; 301 OFDM symbol; 302 guard time; 310 second sub-frame; 400 control circuit; 400a processor; 400b memory.

## Claims

1. A base station in a radio communication system in which a radio frame including a plurality of sub-frames is transmitted and received between the base station and a user equipment using an orthogonal frequency division multiple access scheme, wherein
the sub-frames are each constituted by three or less orthogonal frequency division multiplexing (OFDM) symbols in a time direction and a plurality of sub-carriers in a frequency direction, and
the base station comprises:
a first multiplexing unit to multiplex downlink control information in first OFDM symbol positions of the sub-frames in a frequency domain by allocating resources in such a manner that the resources are dispersed in the frequency direction in units of resource blocks, each of the resource blocks being constituted by a plurality of sub-carriers;
a second multiplexing unit to multiplex user information in OFDM symbol positions other than the first OFDM symbol positions of the sub-frames in a frequency domain by allocating resources in such a manner that the resources are dispersed in a frequency direction in units of the resource blocks; and
an inserting unit to insert a guard time before and after each of the first OFDM symbols.

2. The base station according to claim 1, wherein
the sub-frames are each constituted by two OFDM symbols, and
the second multiplexing unit multiplexes the user information in second OFDM symbol positions.

3. The base station according to claim 1, wherein
the sub-frames are each constituted by three OFDM symbols, and
the second multiplexing unit multiplexes the user information in second OFDM symbol positions and third OFDM symbol positions.

4. The base station according to any one of claims 1 to 3, wherein
the first multiplexing unit determines a sub-frame for a downlink and a sub-frame for an uplink in the radio frame using cell-specific control information included in downlink broadcast information.

5. The base station according to any one of claims 1 to 4, wherein
the second multiplexing unit allocates the resource blocks in time division duplex.

6. The base station according to claim 3, wherein
when the number of information symbols of the user information resulting from error-correcting coding is smaller than one resource block, the second multiplexing unit multiplexes the user information on different resource blocks in the second OFDM symbol positions and the third OFDM symbol positions, and applies frequency hopping within a sub-frame.

7. The base station according to any one of claims 1 to 6, wherein
when the number of information symbols of the control information resulting from error-correcting coding is equal to or larger than one resource block, the first multiplexing unit disperses and multiplexes the control information in units of the resource blocks, and
when the number of information symbols of the user information resulting from error-correcting coding is equal to or larger than one resource block, the second multiplexing unit disperses and multiplexes the user information in units of the resource blocks.

8. The base station according to any one of claims 1 to 7, wherein
when the number of information symbols of the control information resulting from error-correcting coding cannot be multiplexed in one sub-frame period, the first multiplexing unit multiplexes the control information while dividing the control information into two or more sub-frames, and
when the number of information symbols of the user information resulting from error-correcting coding cannot be multiplexed in one sub-frame period, the second multiplexing unit multiplexes the user information while dividing the user information into two or more sub-frames.

9. The base station according to any one of claims 1 to 8, wherein
the first multiplexing unit multiplexes control information on sub-frame allocation in a first OFDM symbol period of a leading sub-frame in the radio frame, the control information on sub-frame allocation indicating whether or not to allocate sub-frames for uplink only or downlink only in a first mode set in advance for the downlink control information.

10. A user equipment in a radio communication system in which a radio frame including a plurality of sub-frames is transmitted and received between a base station and the user equipment using an orthogonal frequency division multiple access scheme, wherein
the sub-frames are each constituted by three or less orthogonal frequency division multiplexing (OFDM) symbols in a time direction and a plurality of sub-carriers in a frequency direction, and
the user equipment comprises:
a demodulating and decoding unit to demodulate and decode downlink control information;
a third multiplexing unit to multiplex uplink control information in a frequency domain on resource blocks on which the downlink control information in first OFDM symbol positions of the sub-frames is not multiplexed, by allocating resources in such a manner that the resources are dispersed in the frequency direction in units of resource blocks;
a fourth multiplexing unit to multiplex user information on the sub-frames which is subjected to allocation according to decoded information of the downlink control information in OFDM symbol positions other than the first OFDM symbol positions of the sub-frames in a frequency domain, by allocating resources in such a manner that the resources are dispersed in the frequency direction in units of the resource blocks; and
an inserting unit to insert a guard time before and after each of the first OFDM symbols.

11. The user equipment according to claim 10, wherein
the sub-frames are each constituted by two OFDM symbols, and
the fourth multiplexing unit multiplexes the user information in second OFDM symbol positions.

12. The user equipment according to claim 10, wherein
the sub-frames are each constituted by three OFDM symbols, and
the fourth multiplexing unit multiplexes the user information in second OFDM symbol positions and third OFDM symbol positions.

13. The user equipment according to claim 12, wherein
when the number of information symbols of the user information resulting from error-correcting coding is less than one resource block, the fourth multiplexing unit multiplexes the user information on different resource blocks in the second OFDM symbol positions and the third OFDM symbol positions, and applies frequency hopping within the sub-frame.

14. The user equipment according to any one of claims 10 to 13, wherein
when the number of information symbols of the control information resulting from error-correcting coding is equal to or larger than one resource block, the third multiplexing unit disperses and multiplexes the control information in units of resource blocks, and
when the number of information symbols of the user information resulting from error-correcting coding is equal to or larger than one resource block, the fourth multiplexing unit disperses and multiplexes the user information in units of resource blocks.

15. The user equipment according to any one of claims 10 to 14, wherein
when the number of information symbols of the control information resulting from error-correcting coding cannot be multiplexed in one sub-frame period, the third multiplexing unit multiplexes the control information while dividing the control information into two or more sub-frames, and
when the number of information symbols of the user information resulting from error-correcting coding cannot be multiplexed in one sub-frame period, the fourth multiplexing unit multiplexes the user information while dividing the user information into two or more sub-frames.

16. The user equipment according to any one of claims 10 to 15, wherein the demodulating and decoding unit detects whether sub-frame allocation is to be in a first mode used for transmission of the base station, and when the sub-frame allocation is in the first mode, demodulates and decodes only uplink control information in sub-frame positions corresponding to sub-frames allocated to an uplink data channel, or when the sub-frame allocation is not in the first mode, demodulates and decodes only uplink control information in sub-frame positions corresponding to sub-frames allocated to the uplink data channel.
